# EUROPÄISCHE PATENTSCHRIFT

(11) **EP 3 317 183 B1**
(45) Veröffentlichungstag und Bekanntmachung des Hinweises auf die Patenterteilung: **16.06.2021**
(21) Anmeldenummer: 16748260.3
(22) Anmeldetag: 28.06.2016
(51) Int. Cl.: B64D 11/06, B60N 2/02

(54) **DEZENTRALES SITZSTEUERUNGSSYSTEM**
DECENTRALIZED SEAT CONTROL SYSTEM
SYSTÈME DE COMMANDE DE SIÈGE DÉCENTRALISÉ

(30) Priorität: 03.07.2015 DE 102015212516
(43) Veröffentlichungstag der Anmeldung: 09.05.2018
(73) Patentinhaber: Bühler Motor GmbH, 90459 Nürnberg (DE)
(72) Erfinder: SCHLOSSER, Stefan, 91301 Forchheim (DE); GRÖLLICH, Stefan, 88690 Uhldingen-Mühlhofen (DE)
(86) Internationale Anmeldenummer: PCT/DE2016/200297
(87) Internationale Veröffentlichungsnummer: WO 2017/005259

(56) Entgegenhaltungen:
- EP-A2- 1 834 876
- DE-A1-102004 047 149
- DE-A1-102012 024 641
- DE-B3-102008 062 092
- US-A1- 2008 009 989

## Beschreibung

Die Erfindung betrifft ein dezentrales Sitzsteuerungssystem (1) für Sitze (2) mit mehreren relativ zueinander linear- oder winkelbeweglichen Sitzelementen.

Fahrzeugsitze, insbesondere Flugzeugsitze der oberen Klasse, weisen in der Regel eine Reihe von beweglichen Sitzelementen auf wie Rückenlehne, Nackenstütze, Beinauflage, Fußstütze, etc., welche mittels z. B. elektromotorischer Antriebe linear oder um einen Winkel verstellbar sind. Weiter können über Pumpen und Ventile betätigte pneumatische Kissen als Lordosenstütze, z. B. mit Massagefunktion, Bediengeräte, Leselampen, Unterhaltungsfunktionen und Sicherheitseinrichtungen, wie Verriegelungsschlösser vorhanden sein. Die unterschiedlichen Antriebe und sonstigen Funktionen können der Einfachheit halber als Geräte bezeichnet werden, welche miteinander über ein Steuerungssystem verbunden sind. Ein Steuerungssystem löst die einzelnen Funktionen aus, überwacht und koordiniert diese.

Die EP 1 432 593 B1 beschreibt ein Steuerungs- und Energieversorgungssystem für die Antriebe in Flugzeugsitzplätzen. Um eine sichere Funktion zu gewährleisten wird hierbei ein redundanter Aufbau des Systems vorgeschlagen, bei welchem jeder Antrieb von zwei Netzgeräten versorgbar ist und das System über eine zentrale Steuereinheit verfügt, welches die Antriebe steuert, wobei die einzelnen Geräte durch eine Datenleitungseinrichtung miteinander verbunden sind. Zudem soll die Funktion der zentralen Steuereinheit bei deren Ausfall von einem mit einer Software ausgestatteten Antrieb übernommen werden. In einer Weiterbildung sollen mehrere oder alle Antriebe durch ihre verteilte Intelligenz die Funktion der zentralen Steuereinheit übernehmen. Diese Lösung ist aufgrund der hohen Anzahl an Einzelgeräten unwirtschaftlich und führt aufgrund des Gewichts dieser Geräte zu einem erhöhten Kraftstoffverbrauch.

Die DE 10 2004 047 149 A1 beschreibt eine Steuerungsanlage für komplexe Systeme insbesondere für einen Flugzeugsitz, mit Baugruppen wie Antriebe, Pumpen, Ventile, Lampen etc., die jeweils mindestens einen Prozessor mit einer Schnittstelle zur Kommunikation sowie einen funktionalen Block aufweisen und als Busteilnehmer über ein Bussystem miteinander in Verbindung stehen, wobei anstelle eines zentralen Steuergeräts mehrere Busteilnehmer jeweils Teile der Steueraufgaben übernehmen. Hierbei kann zwar aufgrund der verteilten Steueraufgaben auf eine zentrale Steuerung verzichtet werden, es müssen jedoch auch einfache Geräte, z. B. eine Lampe mit einem Prozessor ausgestattet werden, um ansteuerbar zu sein.

Die DE 10 2008 062 092 B3 offenbart ein dezentrales Sitzsteuerungssystem für einen Sitz oder Sitze, insbesondere einen Kraftfahrzeugsitz, mit mehreren Vorrichtungen , die jeweils einen i-Baustein aufweisen, zur Einstellung und/oder Verriegelung von wenigstens einer Sitzkomponente, wobei jede Vorrichtung eine mechanische Komponente und einen elektrischen Antrieb zum Antreiben der mechanischen Komponente aufweist, die I-Bausteine der Ansteuerung des elektrischen Antriebs und der Diagnose des elektrischen Antriebs und/oder der mechanischen Komponente dient und dass die Steuerung der im Fahrzeugsitz vorhandenen Vorrichtung dezentral mittels deren als lokale Steuergeräte dienenden, miteinander vernetzten I-Bausteinen erfolgt, welche miteinander kommunizieren.

Die US 2008/009989 A1 offenbart einen Fahrzeugsitz mit einem Sitzsteuerungssystem. Aufgabe der Erfindung ist es ein flexibles, an unterschiedliche Gegebenheiten, insbesondere unterschiedliche Sitzgeometrien, unterschiedliche Systemumgebungen und Systemanforderungen anpassbares Sitzsteuerungssystem darzustellen, welches außerordentlich zuverlässig arbeitet, einfach zu warten ist, einfach aufgebaut und verkabelt ist und das nur eine minimale Anzahl an unterschiedlichen Geräten benötigt, die in unterschiedlichster Weise miteinander kombinierbar sind.

Diese Aufgabe wird erfindungsgemäß durch die Merkmale des Anspruchs 1 gelöst. Da eines der intelligenten Geräte (4 bis 9) neben seiner Grundfunktion zusätzlich die Funktion eines System-Masters hat, von welchem andere intelligente Geräte (4 bis 9) Steuerbefehle erhalten, ist eine zuverlässige Funktion der Sitzsteuerung gegeben, ohne dass eine zentrale Steuerung vorgesehen werden muss. Geräte werden als intelligent bezeichnet, wenn diese über eine Rechen- und eine Speichereinheit verfügen und über eine BUS-Schnittstelle mit anderen intelligenten Geräten (4 bis 9) kommunizieren kann. Die Erfindung ermöglicht ein sehr flexibles Sitzsteuerungssystem (1), bei welchem eine minimale Anzahl an unterschiedlich gestalteten Geräten ein Maximum an Funktionen erfüllen kann. Die Aussagekraft der Log-Daten wird dadurch weiter erhöht, dass diese dem Kabineninnendruck zugeordnet werden. Dieser ist indirekt ein Maß für die Flughöhe bzw. dem Start- oder Landestatus. Nach einem weiteren Aspekt der Erfindung ist vorgesehen, dass die Antriebe (4, 5, 7) über eine integrierte Bewegungssteuerung verfügen, welche Schnittstellen zu einem Antrieb, wie z. B. einem Elektromotor (90), zu einer Stellungsrückmeldung, z. B. einem Potentiometer (92), zu einem Temperatursensor (93), zu einer Bremse (91) und zum Kommunikationsbus (17) aufweisen.

Die einzelnen Geräte weisen Grundfunktionen auf. Bediengeräte werden auch als "Passenger Control Unit" kurz "PCU" bezeichnet; sie bestehen im vorliegenden Beispiel aus einem Touchscreen mit Menüführung und erlauben die individuelle Steuerung der Sitzelemente; seine Grundfunktion ist die "Bedienfunktion".

Das intelligente Schnittstellengerät wird auch als "Seat Interface Device", kurz "SID" bezeichnet; es dient als Service-Schnittstelle, Datensammler etc.; seine Grundfunktion ist die "Servicefunktion".

Das intelligente Steuergerät für nicht intelligente Geräte oder Geräte ohne Steuerungsfunktion wird auch als "Discrete Line Controller", kurz "DLC" bezeichnet; seine Grundfunktion ist die Steuerung nicht busfähiger Zusatzeinrichtungen wie Leselicht (10), Stimmungsbeleuchtung, externe Bedieneinheit, Verriegelungen (80) und sonstige externe Geräte.

Das Netzgerät (3) wird auch als "Power Supply" bezeichnet; es dient als Schnittstelle zum Bordnetz mit Transformation der Bordnetzspannung auf z. B. 28 V. Das Netzgerät (3) weist mehrere (z. B. vier) DC-Ausgänge, sogenannte "Ports" auf und dient als zentrale Spannungsversorgung für eine Gruppe von Sitzen (2) und/oder anderen Geräten; seine Grundfunktion ist die Verteilung der Bordspannung und die Bereitstellung von Identifikations-Informationen (ID).

"Masterfunktion" bedeutet, dass ein intelligentes Gerät (4 bis 9) lediglich die Funktion eines System-Masters hat, aber nicht ausschließlich als System-Master dient, sondern darüber hinaus eine Grundfunktion hat.

Weiterbildungen der Erfindung werden in den Unteransprüchen dargestellt. Eine besonders vorteilhafte Weiterbildung der Erfindung beruht darin, dass die Aufgaben eines System-Masters auf mehrere intelligente Geräte (4 bis 9) verteilt sind, wobei jedes intelligente Gerät (4 bis 9) neben seiner Grundfunktion eine Teilaufgabe oder Teilaufgaben eines Teil-System-Masters hat.

Weiter ist es sinnvoll, dass die Teil-System-Master Untergruppen in Bezug auf die Gesamtfunktionalität bilden. Ein erster Teil-System-Master könnte für die Bewegungskoordination der Antriebe eines ersten Sitzes (2) zuständig sein, ein zweiter Teil-System-Master für die Bewegungskoordination der Antriebe (4, 5, 7) eines zweiten Sitzes (2). Ein weiterer Teil-System-Master könnte die übrigen Funktionen steuern. Auf diese Weise lassen sich die verschiedenen Funktionen einfacher programmieren.

Zweckmäßigerweise ist vorgesehen, dass intelligente Geräte (4 bis 9) mit einer System-Master- oder Teil-System-Master-Funktion von den übrigen intelligenten Geräten (4 bis 9) Statusinformationen erhalten.

Gemäß einer Weiterbildung der Erfindung ist vorgesehen, dass eines der intelligenten Geräte (4 bis 9) die übrigen Geräte eines Sitzes (2) oder mehrerer Sitze (2) steuert und die Aufgabe der Bewegungskoordination der Sitzelemente des oder der Sitze (2) hat.

Ebenso kann eines der Geräte (4 bis 9) einen Teilbereich der Antriebe (4, 5, 7) eines Sitzes (2) oder mehrerer Sitze (2) steuern, ein anderes Gerät (4 bis 9) einen anderen Teilbereich eines Sitzes (2) oder mehrerer Sitze (2) steuern, und das jeweilige Gerät (4 bis 9) die Aufgabe der Bewegungskoordination der Teil-Sitzelemente des oder der Sitze (2) haben.

Aus wirtschaftlichen und praktischen Gründen besitzt nicht jedes Gerät (4 bis 9), das an einem Sitz (2) eine zusätzliche Hilfsfunktion ausführt eine intelligente Steuerung mit BUS-Schnittstelle. Aus diesem Grund ist es von großem Vorteil, dass ein intelligentes Steuergerät (9) mehrere nicht busfähige Zusatzgeräte für Umgebungsfunktionen steuert. Zu diesen Zusatzgeräten zählt beispielhaft ein Leselicht (10), eine Stimmungsbeleuchtung, eine kundenspezifische Beleuchtung, ein Monitor, Verriegelungen (80), externe Sensoren für Umwelterfassung und/oder eine externe Bedieneinheit.

Sitzsteuerungssysteme (1) besitzen in der Regel ein Netzgerät (3), wobei diese eine Schnittstelle zu einem Bordnetz bildet und die Spannung auf z. B. 28 V wandelt.

Das Netzgerät kann einen oder mehrere DC-Ausgänge oder "Ports" haben. In der vorliegenden Ausführungsform weist das Netzgerät (3) vier Ports (21, 22, 23, 24) auf, an welche entweder insgesamt vier Sitze (2) angeschlossen werden können oder z. B. zwei Sitze (2) und sonstige Zusatzgeräte wie Trennwände oder Monitorantriebe.

Bei einer besonders wirtschaftlichen Weiterbildung der Erfindung ist vorgesehen, dass die unterschiedlichen Ports (21, 22, 23, 24) eine Kennung in Form von unterschiedlichen Steuerspannungen beinhalten, welche ein Erkennungsmerkmal für die jeweils angeschlossenen Geräte darstellt.

Je weniger unterschiedliche Geräte im Sitzsteuerungssystem (1) benötigt werden, desto geringer ist der Aufwand für Herstellung und Lagerhaltung, daher wird bevorzugt, dass mehrere Sitze (2) mit identischen Geräten an dem Kommunikationsbus angeschlossen sind und eine Unterscheidung über die unterschiedlichen Steuerspannungen durchführbar ist.

Das Sitzsteuerungssystem (1) ist so flexibel aufgebaut, dass neben Sitzen (2) auch andere zu steuernden Mittel eingebunden werden können. Hier sind vier Gruppen vorhanden, welche aus Sitzen (2), Trennwänden oder anderen Einrichtungen, wie z. B. einer Monitorverstellvorrichtung bestehen für welche eine minimale Anzahl an unterschiedlichen Antrieben (4, 5, 7) vorgesehen ist, deren Anzahl geringer ist als die absolute Anzahl an Antrieben (4, 5, 7).

Alternativ zu einem differenzierten Spanungsniveau besitzt jeder Sitz (2) oder Funktionsgruppe eine digitale oder analoge Kennung und das Netzgerät (3) weist eine Splitterfunktion auf, durch welche mehrere (z. B. bis zu vier) Sitze (2) bzw. Geräte ansteuerbar sind. Die Splitterfunktion kann auch in einem separaten oder einem anderen Gerät des Sitzsteuerungssystems (1) integriert sein.

Um das Sitzsteuerungssystem (1) besonders einfach installieren oder warten zu können ist ein intelligentes Schnittstellengerät/SID (6) vorgesehen, welches als Service-Schnittstelle dient, über welche Software und/oder Parametersätze auf alle intelligenten Geräte (4 bis 9) hochladbar sind. Im Übrigen kann das intelligente Schnittstellengerät/SID (6) zur Sammlung und Speicherung von Systemdaten dienen.

Zu einer weiteren Funktion des intelligenten Schnittstellengerätes/SID (6) gehört das Konfigurationsmanagement des Antriebssystems.

Aufgrund unterschiedlicher geometrischer Gegebenheiten bei unterschiedlichen Einsatzfällen kann sich eine Vielzahl verschiedener Konfigurationen ergeben. Hierbei ist es besonders vorteilhaft, dass durch einen Parametersatz in allen intelligenten Geräten (4 bis 9) die Auswahl der Geräte mit System-Master- oder Teil-System-Master-Funktion definierbar ist.

Das Sitzsteuerungssystem (1) ist durch die Reduktion der involvierten Bauteile besonders zuverlässig. Um die Zuverlässigkeit noch weiter zu erhöhen, übernimmt bei Ausfall eines intelligenten Geräts (4 bis 9) ein anderes intelligentes Gerät (4 bis 9) deren Funktion oder Teilfunktion. Die Übergabe ist dabei ebenfalls durch den Parametersatz geregelt.

Um eine möglichst wirtschaftliche und einfache Verkabelung der Geräte untereinander und ein minimales Gewicht zu erreichen, werden die einzelnen intelligenten Geräte (4 bis 9), obwohl auch eine sternförmige Version möglich wäre, nach dem Daisy-Chain-Prinzip miteinander verschaltet. Das bedeutet, dass sowohl die Spannungsversorgungsleitungen als auch die Datenleitungen einen Eingang und einen Ausgang im jeweiligen Gerät haben.

Ein Merkmal des Sitzsteuerungssystems (1) ist ein hybrider Aufbau, wobei das Steuermodul in jedem Gerät das Gerät auf Basis von Status-Informationen aus dem Kommunikationsbus steuert und weitere Systemaufgaben auf Basis von Steuerbefehlen des aktiven System-Master bzw. der aktiven System-Master ausgeführt werden. Der oder die aktive(n) System-Master empfängt/empfangen den Status der übrigen intelligenten Geräte (4 bis 9) des Systems und sendet/senden Kommandos an die Geräte zurück.

Nach einer besonders vorteilhaften Weiterbildung der Erfindung ist vorgesehen, dass bei Ausfall eines System-Masters ein anderes Gerät (4 bis 9) dessen Rolle übernimmt, dabei ist zweckmäßigerweise vorgesehen, dass bei Ausfall des aktiven System-Masters nach einer vorinstallierten Prioritätenliste das intelligente Gerät (4 bis 9) ausgewählt wird, welches die Funktion des aktiven System-Masters übernimmt.

Um ausreichend Speicherplatz für eine umfassende Datenbasis vorzuhalten, ist ein intelligentes Gerät (4 bis 9), vorzugsweise das intelligente Schnittstellengerät/SID mit einem elektronischen Speicher in ausreichender Größe, wie z. B. von mehr als 1GB ausgestattet. Somit lassen sich statistisch relevante Datenmengen während der Laufzeit oder des Betriebs speichern; diese werden automatisch ausgewertet und somit Ausfälle frühzeitig erkannt und gemeldet.

Damit ein Ereignis einem exakten Zeitpunkt zugewiesen werden kann, weist das System eine Echtzeituhr auf; deren Spannungsversorgung wird über einen Energiespeicher, wie z. B. einem Superkondensator sichergestellt. Dies hat den Vorteil, dass im Falle eines Kondensators (57) keine Batterie erforderlich ist und die Echtzeituhr somit wartungsfrei ist.

Zur integrierten Bewegungssteuerung gehört auch eine Einklemmschutzfunktion, die ein di/dt-Monitoring beinhaltet, wonach die Entstehung einer Einklemmsituation durch einen erhöhten Stromwert erkannt und rechtzeitig unterbunden wird.

Alternativ oder zusätzlich kann eine Einklemmschutzfunktion kinematik- und positionsabhängig vorhanden sein.

Um den Komfort für den Sitzbenutzer zu erhöhen ist eine lastunabhängige Drehzahlregelung implementiert, welche für einen ruhigen, gleichmäßigen Lauf sowohl bei einem geringen, als auch bei einem hohen Gewicht des jeweiligen Benutzers sorgt.

Im Falle der Verwendung eines Elektroantriebs wird der geräuscharme ruhige Lauf der Antriebsmotoren durch eine leistungsoptimierte Kommutierung gewährleistet.

Durch eine Closed Loop-Regelung ist die Motordrehzahl bis zu einer Drehzahl 0 regelbar. Die Closed Loop-Regelung erfolgt auch bis zur maximal notwendigen Drehzahl des jeweiligen Antriebs.

Gemäß einer Weiterbildung der Erfindung ist vorgesehen, dass der System-Master alle ihm untergeordneten Antriebe (4, 5, 7) so steuert, dass bei gleichzeitiger Ansteuerung mehrerer Antriebe (4, 5, 7) als Gruppe über den Kommunikationsbus (17) das Aktivieren und Deaktivieren der Bremsen (91) geräusch- und stromoptimiert erfolgt.

Eine besonders geräuscharme Steuerungsfunktion ist dadurch gegeben, dass, wenn bei deaktivierten Bremsen (91) einzelne Antriebe (4, 5, 7) vor den anderen dem System-Master untergeordneten Antrieben (4, 5, 7) ihren Endpunkt der Bewegung erreichen, die Antriebssteuerung im Falle einer Kraftbeaufschlagung dieser Antriebe (4, 5, 7) mittels einer Positionsregelung solange für eine Gegensteuerung sorgt, bis mit dem Erreichen des Endpunkts der Bewegung durch den letzten Antrieb (4, 5, 7) die Bremsen (91) für alle betroffenen Antriebe (4, 5, 7) wieder aktiviert werden.

Der Kommunikationsbus (17) ist z. B. ein Low Speed CAN BUS mit 125 kBit/s.

Bei einer besonders bauraumsparenden Variante der Erfindung sind das intelligente Steuergerät (9) und das intelligente Schnittstellengerät (6) in einem gemeinsamen Gehäuse integriert. Hierdurch können Steckerbauteile und Verbindungskabel eingespart werden. Weiter ist es möglich elektronische Bauteile des Steuergeräts (9) und des Schnittstellengeräts (6) auf einer einzigen Leiterplatte anzuordnen. Dadurch lassen sich weitere Bauteile einsparen und/oder gemeinsam nutzen.

Ein Ausführungsbeispiel der Erfindung wird nachfolgend anhand der Zeichnung näher erläutert. Es zeigen:
Fig. 1 einen Sitz mit stilisiert angedeuteten Zubehörteilen,
Fig. 2 eine vereinfachte Darstellung eines Bussystems,
Fig. 3 ein Netzgerät,
Fig. 4 ein Block-Diagramm des Netzgeräts,
Fig. 5 ein intelligentes Schnittstellengerät (SID),
Fig. 6 ein Block-Diagramm des intelligenten Schnittstellengerätes (SID),
Fig. 7 ein intelligentes Steuergerät (DLC) und
Fig. 8 ein Block-Diagramm des intelligenten Steuergeräts (DLC),
Fig. 9 ein Bediengerät (PCU),
Fig. 10 ein Block-Diagramm des Bediengeräts (PCU),
Fig. 11 einen Linearantrieb,
Fig. 12 eine Stirnansicht des Linearantriebs,
Fig. 13 ein Beispiel für ein verschaltetes Sitzsteuerungssystem,
Fig. 14 ein Blockschaltbild einer Gruppe von Busteilnehmern und
Fig. 15 ein Blockschaltbild von zwei Gruppen von Busteilnehmern.

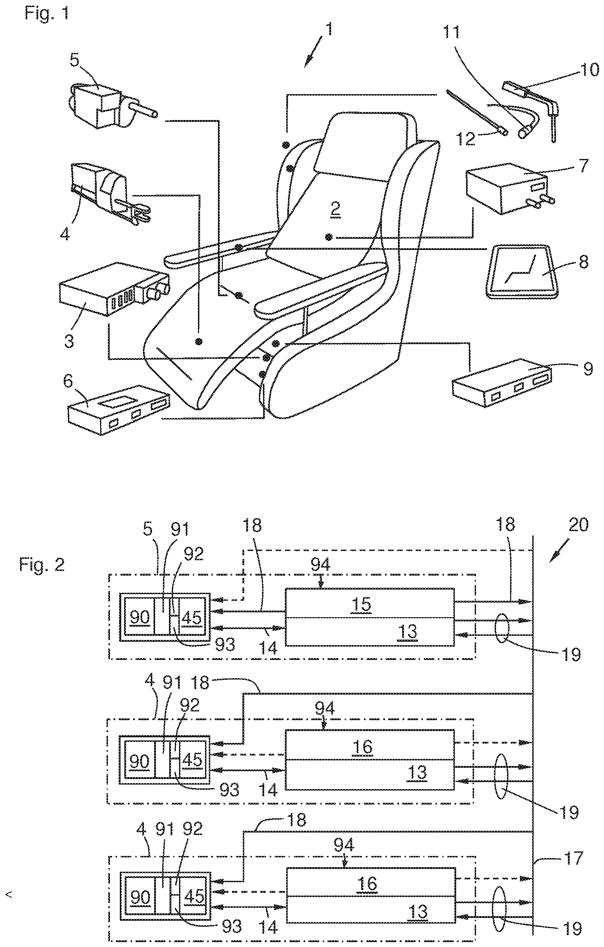

Fig. 1 zeigt einen Sitz 2, der eine Vielzahl von Geräten eines Sitzsteuerungssystems 1 aufweist. Diese Geräte sind der besseren Übersicht halber stilisiert um den Sitz 2 herum angeordnet mit Andeutung ihrer Lage im Sitz 2. Die dargestellten Geräte sind im Einzelnen ein Schwenkantrieb 5, ein Linearantrieb 4, ein Netzgerät 3, ein intelligentes Schnittstellengerät (SID) 6, ein intelligentes Steuergerät (DLC) 9, ein intelligentes Bediengerät 8, ein Lordosenantrieb 7, ein Leselicht 10, eine Stimmungsbeleuchtung 11 und eine kundenspezifische Beleuchtung 12.

In Fig. 2 ist ein vereinfachter Busschaltplan 20 dargestellt, mit einem Kommunikationsbus 17, an welchem mehreren intelligente Geräte 4, 5 angeschlossen sind; zwei Linearantriebe 4 und ein Schwenkantrieb 5. Die Antriebe 4, 5, 7 umfassen neben einem Elektromotor 90, ein Untersetzungsgetriebe 45, Bremsen 91, Potentiometer 92, Temperatursensoren 93 und einen Controller 94. Auf Letzterem sind eine Software mit System-Master-Steuerungsfunktionen bzw. redundante Systemsteuerungsfunktionen und Geräte-Steuerungsfunktionen (Grundfunktion) installiert. Im vorliegenden Beispiel hat der Schwenkantrieb 5 zusätzlich zu seiner Grundfunktion auch eine System-Master-Funktion. Der Schwenkantrieb 5 weist dabei eine aktive System-Master-Steuerung 15 und jeder Linearantrieb 4 weist eine redundante Systemsteuerung 16 auf, welche im Normalbetrieb inaktiv ist. Zusätzlich weisen Schwenkantrieb 5 und Linearantriebe 4 eine Gerätesteuerung 13 auf, welche Elektromotoren 90 und Bremsen 91 der Geräte 4, 5 unmittelbar über Gerätesteuerbefehle 14 ansteuern und Stellungssignale von den Potentiometern 92 und Temperatursignale von den Temperatursensoren 93 als Statusinformationen an den Kommunikationsbus 17 ausgeben. Der Schwenkantrieb 5 (mit System-Master-Funktion) empfängt die Statusinformationen 19 von den übrigen Busteilnehmern, verarbeitet diese und äquivalente Informationen der eigenen Gerätesteuerung 13 und sendet Steuerbefehle 18 an den Kommunikationsbus 17. Von den übrigen Busteilnehmern werden die Steuerbefehle 18 der System-Master-Steuerung 15 mit höherer Priorität ausgeführt als die Gerätesteuerbefehle 14 der jeweiligen lokalen Gerätesteuerung 13. Die redundanten Systemsteuerungen 16 besitzen eine vordefinierte Rangfolge und werden bei Ausfall des Geräts mit der aktiven System-Master-Funktion aktiv und die ranghöchste der redundanten Systemsteuerungen 16 übernimmt dessen Steuerungsaufgaben. Je nach Art der Störung kann auch ein Notprogramm gefahren werden. Die intelligenten Geräte eines Sitzes 2, welche eine Antriebsfunktion haben bilden miteinander eine Funktionsgruppe, wobei das gemäß Definition ranghöchste Gerät eine Teil-Master-Funktion in Bezug auf das Gesamtsystem, das mehrere Sitze 2 umfasst, ausübt. Jedem Sitz 2 und damit jedem Port 21, 22, 23, 24 ist ein Gerät mit einer Teil-Master-Funktion zugeordnet. Die gestrichelten Linien sollen andeuten, dass die Funktionen der Antriebssteuerung bei Ausfall eines Antriebs 4, 5, 7 oder einer Steuerungsfunktion auch wechseln können.

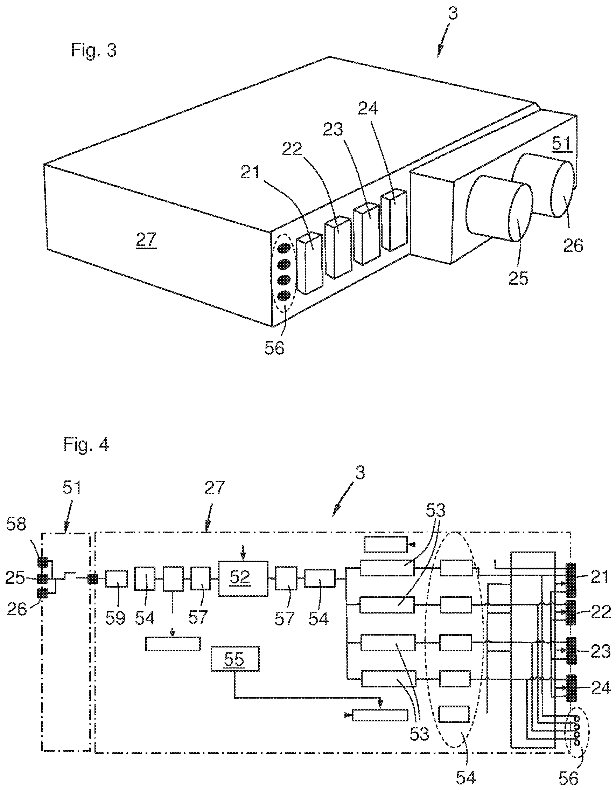

Fig. 3 zeigt eine vereinfachte Darstellung eines Netzgerätes 3, mit einem Netzgeräte-Gehäuse 27, einem Input Box Gehäuse 51, einem Bordnetzeingang 25, einem Bordnetzausgang 26, einem ersten Port 21, einem zweiten Port 22, einem dritten Port 23 und einem vierten Port 24. Die Ports 21 bis 24 sind DC-Ausgänge und besitzen mehrere Anschlusspins. LED's 56 zeigen an, ob an den Ports 21-24 Spannung anliegt. Die Anschlusspins sind belegt mit einem ID-Signal, welches den angeschlossenen intelligenten Geräten den Port 21, 22, 23 oder 24 anzeigt, mit welchem sie verbunden sind und Bus-Kontakten, welche keine Funktion im Netzgerät 3 haben, sondern nur zur Durchleitung dienen. Darüber hinaus sind weitere optionale Anschlüsse vorgesehen. Auch die Bordnetzanschlüsse weisen mehrere Kontakte auf, darunter auch Masse-Kontakte. Das Netzgerät 3 enthält weiter Kurzschlussschutz- und Filterbauteile und eine Überhitzungsschutzeinrichtung.

Fig. 4 zeigt ein vereinfachtes Block-Diagramm des Netzgerätes 3 mit dem Input Box Gehäuse 51, dem Netzgeräte-Gehäuse 27, dem Bordnetzeingang 25, dem Bordnetzausgang 26, einem Massekontakt 58, dem ersten Port 21, dem zweiten Port 22, dem dritten Port 23 und dem vierten Port 24. Zwischen dem Bordnetzeingang 25 und den Ports 21 bis 24 befinden sich: ein DC/DC-Konverter 52, reversible Kurzschlussschutzschaltungen 53, Filter 54, eine Sicherung 59, eine Temperaturmesseinrichtung 55, Kondensatoren 57 und die LED's 56. Das Netzgerät 3 liefert auch ein ID-Signal an jeden Port, um den angeschlossenen intelligenten Geräten anzuzeigen, mit welchem Port sie verbunden sind. Weiter kann ein DC Enable Schaltkreis vorgesehen sein, um eine Notabschaltung über einen Mikroschalter vorzunehmen.

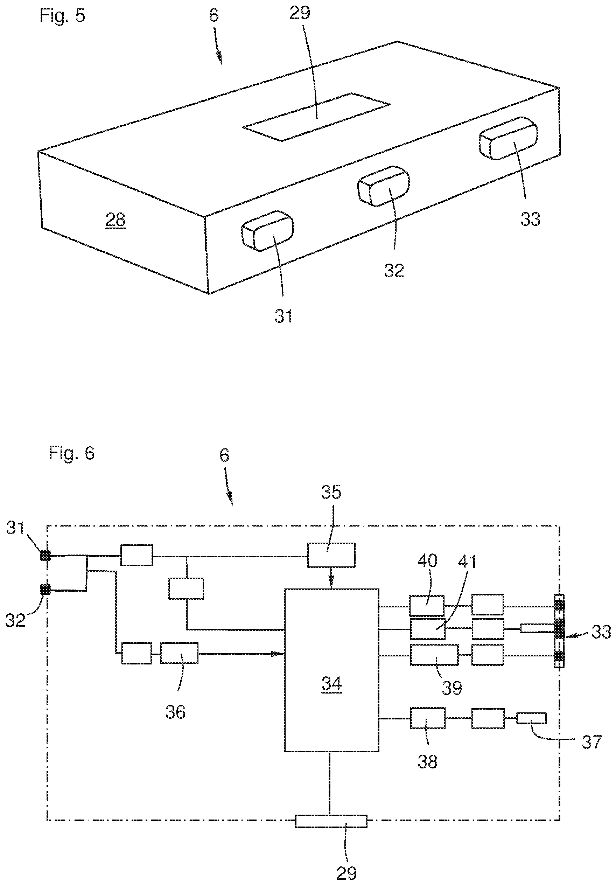

Fig. 5 zeigt ein intelligentes Schnittstellengerät (SID) 6, bestehend aus einem SID-Gehäuse 28, einem Display 29, einem SID-BUS-Eingang 31, einem SID-BUS-Ausgang 32 und einer SID-Interface-Schnittstelle 33.

Fig. 6 zeigt ein Block-Diagramm des intelligenten Schnittstellengerätes (SID) 6, mit dem SID-BUS-Eingang 31, dem SID-BUS-Ausgang 32, einem CAN-BUS-Transceiver 36, einem Microcontroller Board 34, dem Display 29, einer Eingangsspannungsmessung 35, einem RS 232 Transceiver 40, einem RS 485 Transceiver 41, einem Ehternet-Transceiver 38, einem RJ 45 Diagnoseinterface 37, einem SID-Interface 33 und einem USB-Powercontrol 39. Das Microcontroller Board 34 empfängt die BUS-Daten einschließlich dem Spannungssignal, welches die Port-Schnittstelle des Netzgerätes 3definiert, verarbeitet die Daten und gibt die Ergebnisse an die unterschiedlichen Interfaces und das Display 29 aus. Das intelligente Schnittstellengerät (SID) 6 hat keinen Einfluss auf die Funktionalität der Antriebe, der Beleuchtung etc., es dient insbesondere als Datenlogger, zur Datenanalyse, zur Softwareinstallation über USB-Stick und zur Wartung.

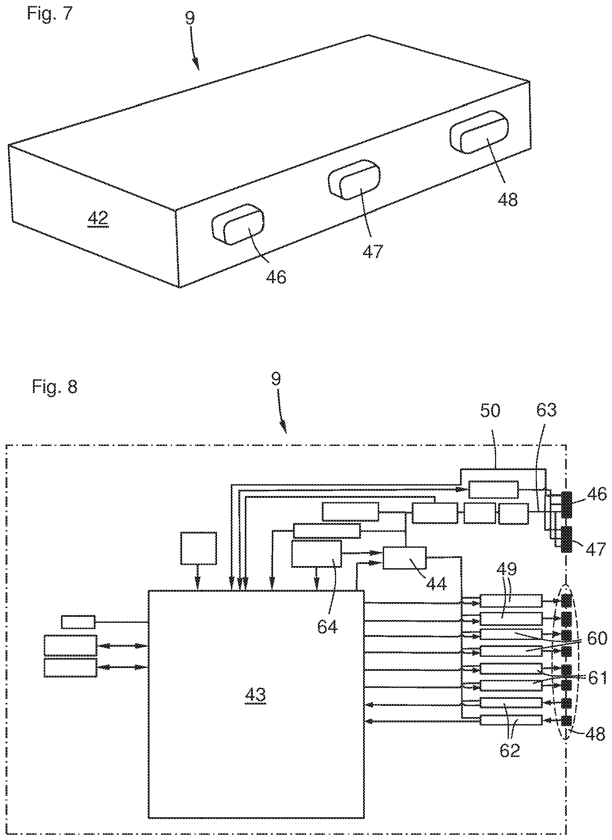

Fig. 7 zeigt ein intelligentes Steuergerät (DLC) 9, mit einem DLC-Gehäuse 42, einem DSL-BUS-Eingang 46, einem DSL-BUS-Ausgang 47 und Powerausgängen. Die Powerausgänge sind durch einen DLC-Steckeranschluss 48 gebündelt. Über einen Kabelbaum 81 sind die unterschiedlichen Zusatzfunktionen, welche keine eigene Intelligenz besitzen, mit dem DLC-Steckeranschluss 48 verbunden und werden hierüber mit ihrer individuellen Spannung versorgt.

Fig. 8 zeigt ein vereinfachtes Block-Diagramm des intelligenten Steuergerätes (DLC) 9 mit einem DLC-Microcontroller 43, einem Power On/Off-Schalter 44, Anzeigelampen-Ausgängen 49, 12V-Ausgängen 60, einem DLC-BUS Ausgang 47, einem DLC-Steckeranschluss 48, 24V-Ausgängen 61 und Eingängen 62. Vom DLC-BUS-Eingang 46 führt eine 28V-Leitung 63 zu dem Power On/Off-Schalter 44, der vom DLC-Microcontroller 43 und einer Temperaturvergleichsschaltung 64 gesteuert wird. Vom DLC-BUS-Eingang 46 erhält der DLC-Mikrocontroller ein ID-Signal 50, über welches der zugehörige Sitz 2 erkannt wird.

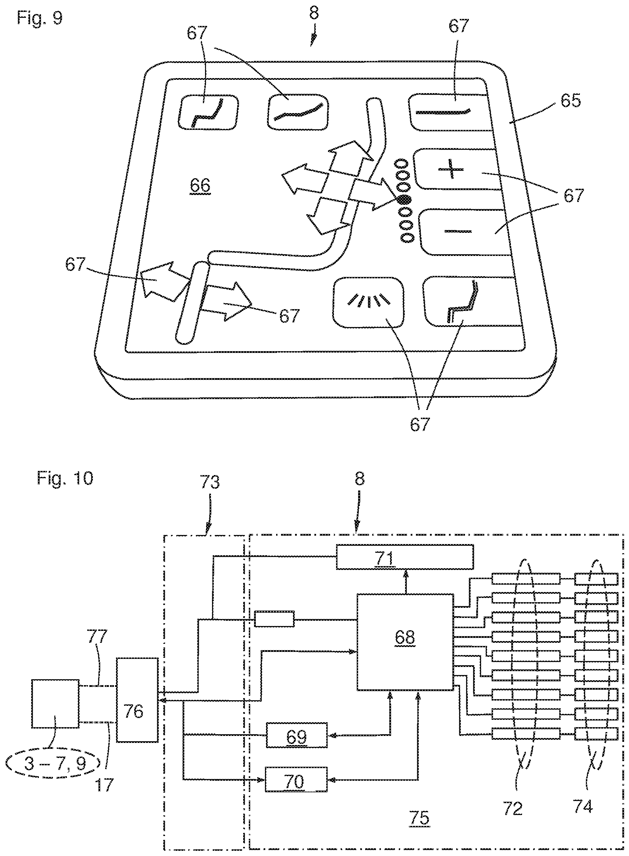

Fig. 9 zeigt ein Beispiel eines Bediengeräts (PCU) 8, zur Ansteuerung von Sitzantrieben, Beleuchtung, etc., bestehend aus einem PCU-Gehäuserahmen 65 aus Aluminium, einem aus gehärtetem Sicherheitsglas hergestellten Glas-Bedienfeld 66, das mehreren kapazitiv wirkende sensitive Bereiche aufweist, welche als Bedienfelder 67 für unterschiedliche Funktionen dienen.

Fig. 10 zeigt ein vereinfachtes Block-Diagramm des Bediengeräts (PCU) 8 aus Fig. 9 mit einem PCU-Mikrocontroller 68, einem PCU-RS 232-Transceiver 69, einem PCU-CAN-Transceiver 70, einer LED-Hintergrundbeleuchtung 71 und einer Vielzahl von Bedienfeldsteuerelementen 72. Der Mikrocontroller 68 dient dazu ,Signale, die von den Bedienfeldern 67 und den Bedienfeldsteuerelementen 72 generiert werden, auszuwerten und daraus Steuerbefehle für die intelligenten Geräte, insbesondere für die Antriebe und die Beleuchtung zu erstellen, welche über den Kommunikationsbus 17 weiterleitbar sind. Der Mikrocontroller 68, die LED-Hintergrundbeleuchtung 71, die kapazitiven Sensoren 74 und die Transceiver 69, 70 sind auf einer gemeinsamen PCU-Leiterplatte 75 aufgebracht. Das Bediengerät (PCU) 8 ist auf einer Rückplatte 73 montiert, welche über einen PCU-Steckverbinder 76 eine Verbindung zum Kommunikationsbus 17 und einen Anschluss an Spannungsversorgungsleitungen 77 herstellt, welche mit anderen intelligenten Geräten 4 bis 9 und dem Netzgerät 3 verbunden sind.

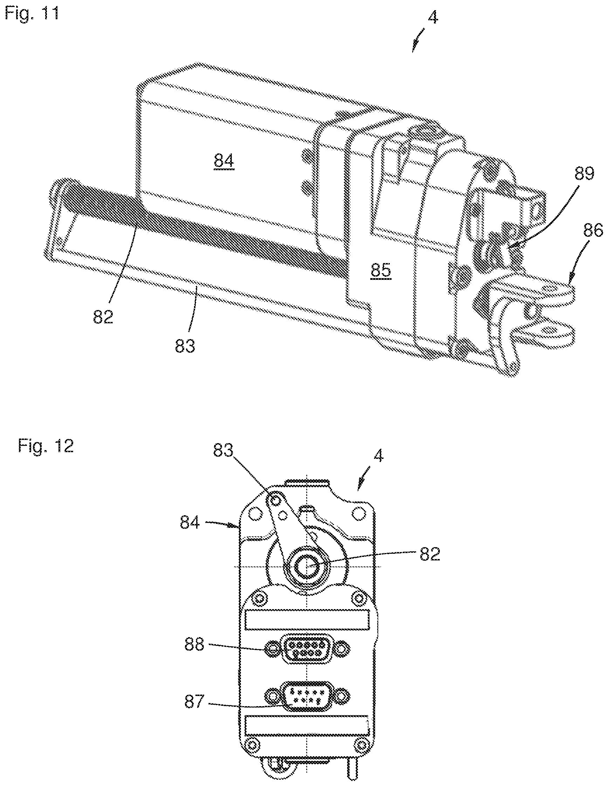

Fig. 11 zeigt einen Linearantrieb 4, mit einem, einen elektronisch kommutierten Gleichstrommotor aufnehmenden Motorgehäuse 84, einem ein Untersetzungsgetriebe 45 aufnehmendes Getriebegehäuse 85, einer Spindel 82, einer mit der Spindel 82 fest verbundenen Führungsstange 83 und einem Verstellelement 86, welches mit einem Sitzelement gelenkig verbindbar ist. Die Spindel 82 durchdringt das Getriebegehäuse 85 und wirkt mit einer durch das Getriebe antreibbaren Spindelmutter (nicht dargestellt) zusammen. Innerhalb des Motorgehäuses 84 befindet sich eine Leiterplatte mit Motion Controller und Low Speed-BUS-Anschluss. Zu den Steuerungsfunktionen des Motion Controllers zählen eine Closed Loop Drehzahlregelung, eine Sinussteuerung des elektronisch kommutierten Gleichstrommotors, eine Absolutpositionssteuerung, eine Einklemmschutzfunktion durch di/dt-Überwachung, ein Thermo-Management, eine Selbstmonitoring-Funktion (BITE-Funktion), EMI-Filterfunktionen und ein Überspannungs- /Überstromschutz. Der Linearantrieb 4 umfasst weiter eine aktive Power-Off-Bremse zur Blockierung des Antriebs gegenüber äußeren Belastungen. Darüber hinaus umfasst der Linearantrieb 4 eine Release-Kupplung 89, die im Falle einer Fehlfunktion über einen Release-Hebel und einen Bowdenzug bedienbar ist.

Fig. 12 zeigt eine Stirnansicht des Linearantriebs 4, mit der Spindel 82, der Führungsstange 83, dem Motorgehäuse 84, einem Antriebs-BUS-Eingang 87 und einem Antriebs-BUS-Ausgang 88, welche als männliche bzw. weibliche Steckeranschlüsse ausgebildet sind, über welche sowohl die elektrische Spannungsversorgung als auch die Datenübertragung erfolgt. Aufgrund der seriellen BUS-Architektur lassen sich auf einfache Weise per Daisy-Chain-Verbindung weitere Antriebe in das System einbinden.

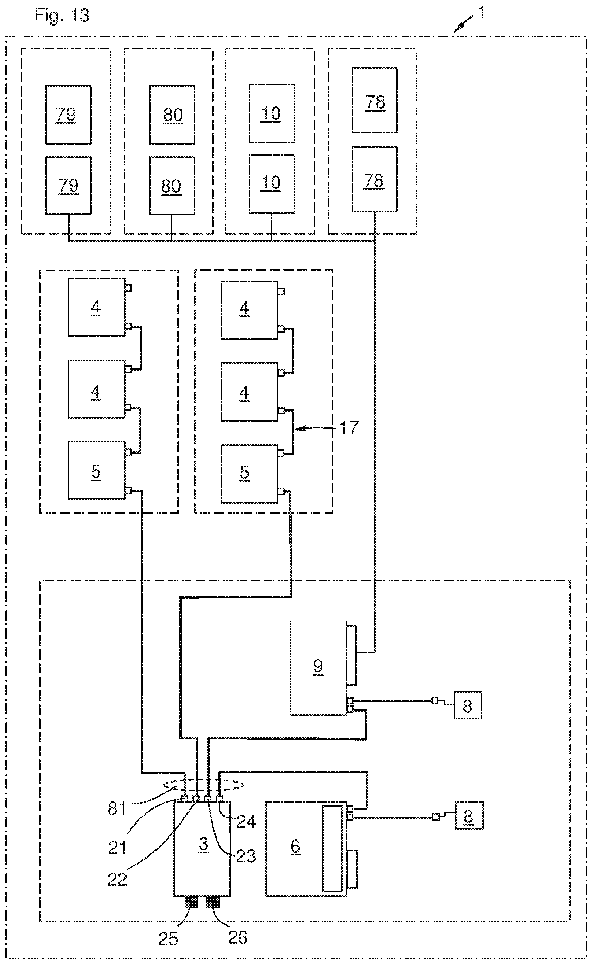

Fig. 13 zeigt ein Beispiel für ein verschaltetes Sitzsteuerungssystem 1, mit einem Netzgerät 3, einem intelligenten Schnittstellengerät (SID) 6, ein erstes Bediengerät (PCU) 8 für einen ersten Sitz 2 und ein zweites Bediengerät (PCU) 8 für einen zweiten Sitz 2, ein intelligentes Steuergerät (DLC) 9, Linearantriebe 4, Schwenkantriebe 5, TTL-Anzeigelampe 78, Leselicht (10), Verriegelungssensoren 79 und Verriegelungen 80. Über einen Kabelbaum 81 sind die Antriebe 4, 5 an den Ports 21 bzw. 22, das intelligente Schnittstellengerät (SID) 6 an Port 24 und das intelligente Steuergerät (DLC) 9 am Port 23 des Netzgerät 3 verbunden. Die Antriebe untereinander sind über eine Daisy-Chain-Verkabelung verbunden. Ein Bediengerät (PCU) 8 ist in diesem Beispiel mit dem Schnittstellengerät (SID) 6 und das zweite Bediengerät (PCU) 8 ist mit dem intelligenten Steuergerät (DLC) 9 verbunden. Letzteres stellt auch eine Verbindung mit Verriegelungssensoren 79, Verriegelungen 80 und einer TTL-Anzeigelampe her. Die TTL-Anzeigelampe 78 zeigt an, ob bei dem jeweiligen Sitz die TTL-Position (Landeposition) erreicht ist. Der Verriegelungssensor 79 erkennt, ob der Passagier seinen Sicherheitsgurt angelegt hat oder ob der Sitz 2 verriegelt ist. Das Netzgerät 3 weist einen Bordnetzeingang 25 und einen Bordnetzausgang 26 auf. Die Beiden zugeordneten Sitze 2 bilden eine Sitzgruppe, für welche jeweils nur ein Netzgerät 3, ein Schnittstellengerät (SID) 6 und ein intelligentes Steuergerät (DLC) 9 benötigt wird.

Sollen mehr als zwei Sitze 2 angetrieben und angesteuert werden, sind die beiden Ports 23 und 24 mit den jeweiligen Antrieben der zusätzlichen Sitze 2 verbunden. Das intelligente Schnittstellengerät (SID) 6 und das intelligente Steuergerät (DLC) 9 sind in diesem Fall z. B. an einem Freien BUS-Anschluss eines der Antriebe angeschlossen oder SID 6 und DLC 9 sind zwischen Netzgerät 3 und Antrieben in einer Daisy-Chain-Kette verschaltet. Ebenso können auch die Bediengeräte (PCU) 8 an nahezu beliebiger Stelle am Kommunikationsbus 17 angeschlossen sein. Die Anordnung richtet sich eher nach dem Verkabelungsaufwand und der Beweglichkeit der mit den BUS-Kabeln verbundenen Antriebe.

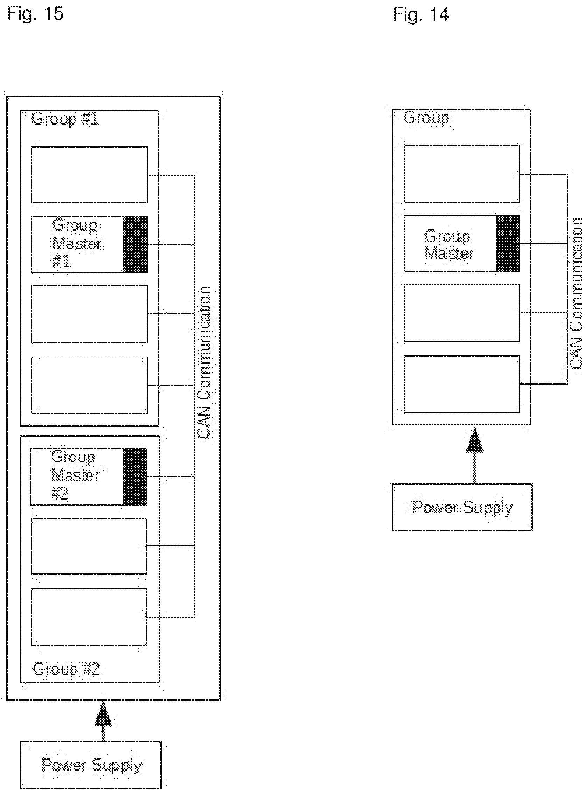

Fig. 14 zeigt ein Blockschaltbild einer Gruppe von Geräten, die über einen CAN-BUS miteinander kommunizieren, wobei für die Gruppe eines der Geräte neben seiner Grundfunktion die Funktion eines Gruppen-Masters ausübt.

Fig. 15 zeigt ein Blockschaltbild von zwei Gruppen von Geräten, die an demselben CAN-BUS angeschlossen sind, aber jeweils einen Gruppen-Master innerhalb ihrer Gruppe aufweisen. Die beiden Gruppen bestehen aus einer unterschiedlichen Anzahl an Geräten und als Gruppen-Master ist jeweils ein anderer Gerätetyp definiert. Auch hier übt der jeweilige Gruppen-Master zusätzlich eine Grundfunktion aus. Auf diese Weise sind die Aufgaben des System-Masters auf mehrere intelligente Geräte verteilt, welche jeweils für Teilaufgaben zuständig sind. Die Masterfunktionen können vom jeweiligen Gruppen-Master oder von anderen Geräten mit Masterfunktion bestimmt werden.

**Bezugszeichenliste**

| | | | |
|---|---|---|---|
| 1 | Sitzsteuerungssystem | 29 | Display |
| 2 | Sitz | 31 | SID-BUS-Eingang |
| 3 | Netzgerät | 32 | SID-BUS-Ausgang |
| 4 | Linearantrieb | 33 | SID-Interface |
| 5 | Schwenkantrieb | 34 | Microcontroller Board |
| 6 | Schnittstellengerät (SID) | 35 | Eingangsspannungsmessung |
| 7 | Lordosenantrieb | 36 | CAN-BUS-Transceiver |
| 8 | Bediengerät (PCU) | 37 | RJ 45 Diagnoseinterface |
| 9 | Steuergerät (DLC) | 38 | Ethernet-Transceiver |
| 10 | Leselicht | 39 | USB-Powercontrol |
| 11 | Stimmungsbeleuchtung | 40 | RS 232 Transceiver |
| 12 | kundenspezifische Beleuchtung | 41 | RS 485 Transceiver |
| 13 | Gerätesteuerung | 42 | DLC-Gehäuse |
| 14 | Gerätesteuerbefehl | 43 | DLC-Microcontroller |
| 15 | System-Master-Steuerung | 44 | Power On/Off-Schalter |
| 16 | redundante Systemsteuerung | 45 | Untersetzungsgetriebe |
| 17 | Kommunikationsbus | 46 | DLC-BUS-Eingang |
| 18 | Steuerbefehl | 47 | DLC-BUS-Ausgang |
| 19 | Statusinformation | 48 | DLC-Steckeranschluss |
| 20 | Busschaltplan | 49 | Anzeigelampen-Ausgang |
| 21 | erster Port | 50 | ID Signal |
| 22 | zweiter Port | 51 | Input Box Gehäuse |
| 23 | dritter Port | 52 | DC/DC-Konverter |
| 24 | vierter Port | 53 | Kurzschlussschutzschaltung |
| 25 | Bordnetzeingang | 54 | Filter |
| 26 | Bordnetzausgang | 55 | Temperaturmesseinrichtung |
| 27 | Netzgeräte-Gehäuse | 56 | LED |
| 28 | SID-Gehäuse | 57 | Kondensator |
| 58 | Massekontakt | 90 | Elektromotor |
| 59 | Sicherung | 91 | Bremse |
| 60 | 12V-Ausgang | 92 | Potentiometer |
| 61 | 24V-Ausgang | 93 | Temperatursensor |
| 62 | Eingang | 94 | Controller |
| 63 | 28V-Leitung | | |
| 64 | Temperaturvergleichsschaltung | | |
| 65 | PCU-Gehäuserahmen | | |
| 66 | Glas-Bedienfeld | | |
| 67 | Bedienfeld | | |
| 68 | PCU-Mikrocontroller | | |
| 69 | PCU-RS 232-Transceiver | | |
| 70 | PCU-CAN-Transceiver | | |
| 71 | LED-Hintergrundbeleuchtung | | |
| 72 | Bedienfeldsteuerelement | | |
| 73 | Rückplatte | | |
| 74 | kapazitiver Sensor | | |
| 75 | PCU-Leiterplatte | | |
| 76 | PCU-Steckverbinder | | |
| 77 | Spannungsversorgungsleitung | | |
| 78 | TTL-Anzeigelampe | | |
| 79 | Verriegelungssensor | | |
| 80 | Verriegelung | | |
| 81 | Kabelbaum | | |
| 82 | Spindel | | |
| 83 | Führungsstange | | |
| 84 | Motorgehäuse | | |
| 85 | Getriebegehäuse | | |
| 86 | Verstellelement | | |
| 87 | Antriebs-BUS-Eingang | | |
| 88 | Antriebs-BUS-Ausgang | | |
| 89 | Release-Kupplung | | |

## Patentansprüche

1. Dezentrales Sitzsteuerungssystem (1) für einen Sitz (2) oder Sitze (2), mit mehreren relativ zueinander linear- oder winkelbeweglichen Sitzelementen, mit intelligenten Geräten wie elektromotorische, pneumatische oder hydraulische Antriebe (4, 5) und Lordosenantrieb (7) durch welche die Sitzelemente verstellbar sind, im Bedarfsfall mit einem intelligenten Steuergerät (9) für nicht intelligente Geräte oder Geräte ohne Steuerungsfunktion wie Leselicht (10) etc. und auch im Bedarfsfall mit einem intelligenten Schnittstellengerät (6), sowie mit intelligenten Bediengeräten (8) und einem intelligenten oder passiven Netzgerät (3), die intelligenten Geräte (4 bis 9) an einem seriellen Datenbus und an dem Netzgerät (3) angeschlossen sind und jedes intelligente Gerät (4 bis 9) eine Grundfunktion und ein frei wählbares intelligentes Gerät zusätzlich die Funktion eines aktiven System-Masters hat, von welchem andere intelligente Geräte (4 bis 9) Steuerbefehle erhalten, wobei Log-Daten dem Kabineninnendruck zugeordnet werden und die Antriebe (4, 5, 7) über eine integrierte Bewegungssteuerung verfügen, welche Schnittstellen zum Motor, zu einer Stellungsrückmeldung, zu einem Temperatursensor (93), zu einer Bremse (91) und zu einem Kommunikationsbus (17) aufweisen.

2. Dezentrales Sitzsteuerungssystem (1) nach Anspruch 1, **dadurch gekennzeichnet, dass** die Aufgaben eines System-Masters auf mehrere intelligente Geräte (4 bis 9) verteilt sind, wobei jedes intelligente Gerät (4 bis 9) neben ihrer Grundfunktion eine Teilaufgabe oder Teilaufgaben eines Teil-System-Masters hat.

3. Dezentrales Sitzsteuerungssystem (1) nach Anspruch 2, **dadurch gekennzeichnet, dass** die Teil-System-Master Untergruppen in Bezug auf die Gesamtfunktionalität bilden.

4. Dezentrales Sitzsteuerungssystem (1) nach Anspruch 1, 2 oder 3, **dadurch gekennzeichnet, dass** ein intelligentes Gerät (4 bis 9) mit einer System-Master- oder Teil-System-Master-Funktion von anderen intelligenten Geräten (4 bis 9) Statusinformationen erhält.

5. Dezentrales Sitzsteuerungssystem (1) nach zumindest einem der vorangehenden Ansprüche, **dadurch gekennzeichnet, dass** eines der Geräte (4 bis 9) die Antriebe (4, 5, 7) eines Sitzes (2) oder mehrerer Sitze (2) steuert und die Aufgabe der Bewegungskoordination der Sitzelemente des oder der Sitze (2) hat.

6. Dezentrales Sitzsteuerungssystem (1) nach zumindest einem der vorangehenden Ansprüche, **dadurch gekennzeichnet, dass** eines der Geräte (4 bis 9) einen Teilbereich der Antriebe (4, 5, 7) eines Sitzes (2) oder mehrerer Sitze (2) steuert, ein anderes Gerät einen anderen Teilbereich eines Sitzes (2) oder mehrerer Sitze (2) steuert und das jeweilige Gerät die Aufgabe der Bewegungskoordination der Teil-Sitzelemente des oder der Sitze (2) hat.

7. Dezentrales Sitzsteuerungssystem (1) nach zumindest einem der vorangehenden Ansprüche, **dadurch gekennzeichnet, dass** zu den nicht intelligenten Geräten (4 bis 9) oder Geräten ohne Steuerungsfunktion beispielhaft ein Leselicht (10), ein Stimmungslicht, eine kundenspezifische Beleuchtung, ein Monitor, Verriegelungen (80), externe Sensoren für Umwelterfassung und/oder ein externe Bedieneinheit zählt.

8. Dezentrales Sitzsteuerungssystem (1) nach zumindest einem der vorangehenden Ansprüche, **dadurch gekennzeichnet, dass** das Netzgerät (3) eine Schnittstelle zu einem Bordnetz bildet und die Bordnetzspannung auf z. B. 28 V wandelt.

9. Dezentrales Sitzsteuerungssystem (1) nach Anspruch 8, **dadurch gekennzeichnet, dass** das Netzgerät (3) einen oder mehrere Ports (21 bis 24) aufweist, an welche mehrere Sitze (2) angeschlossen werden können oder z.B. zwei Sitze (2) und sonstige Geräte wie Trennwände oder Monitorantriebe.

10. Dezentrales Sitzsteuerungssystem (1) nach Anspruch 9, **dadurch gekennzeichnet, dass** die unterschiedlichen Ports (21 bis 24) mit einer Portkennung ausgestattet sind, welche ein Erkennungsmerkmal für die jeweils anzusteuernden Geräte darstellt.

11. Dezentrales Sitzsteuerungssystem (1) nach Anspruch 10, **dadurch gekennzeichnet, dass** mehrere Sitze (2) mit identischen Geräten an dem Kommunikationsbus (17) angeschlossen sind und eine Unterscheidung über die Portkennung durchführbar ist.

12. Dezentrales Sitzsteuerungssystem (1) nach Anspruch 11, **dadurch gekennzeichnet, dass** mehrere Gruppen vorhanden sind, welche aus Sitzen (2), Trennwänden oder anderen Einrichtungen wie Monitorverstellvorrichtungen bestehen, für welche eine minimale Anzahl an unterschiedlichen Antrieben (4, 5, 7) vorgesehen ist, welche geringer ist als die absolute Anzahl an Antrieben (4, 5, 7).

13. Dezentrales Sitzsteuerungssystem (1) nach zumindest einem der Ansprüche 1 bis 10, **dadurch gekennzeichnet, dass** jeder Sitz (2) oder Funktionsgruppe eine Kennung besitzt und das Netzgerät (3) eine Splitterfunktion aufweist, durch welche mehrere Sitze (2) bzw. Geräte ansteuerbar sind.

14. Dezentrales Sitzsteuerungssystem (1) nach zumindest einem der Ansprüche 1 bis 10, **dadurch gekennzeichnet, dass** jeder Sitz (2) oder Funktionsgruppe eine Kennung besitzt und eine Splitterfunktion in ein separates oder anderes Gerät des Sitzsteuerungssystems (1) integriert ist, durch welche mehrere Sitze (2) bzw. Geräte ansteuerbar sind.

15. Dezentrales Sitzsteuerungssystem (1) nach zumindest einem der vorangehenden Ansprüche, **dadurch gekennzeichnet, dass** das intelligente Schnittstellengerät (6) als Service-Schnittstelle dient, über welches Software und/oder Parametersätze auf alle intelligenten Geräte (4 bis 9) des dezentralen Sitzsteuerungssystems (1) hochladbar ist.

16. Dezentrales Sitzsteuerungssystem (1) nach Anspruch 15, **dadurch gekennzeichnet, dass** das intelligente Schnittstellengerät (6) zur Sammlung und Speicherung von Systemdaten dient.

17. Dezentrales Sitzsteuerungssystem (1) nach Anspruch 15 oder 16, **dadurch gekennzeichnet, dass** das intelligente Schnittstellengerät (6) die Funktion eines Konfigurationsmanagements in Bezug auf andere Bordsysteme im Fahrzeug/Flugzeug hat.

18. Dezentrales Sitzsteuerungssystem (1) nach zumindest einem der vorangehenden Ansprüchen, **dadurch gekennzeichnet, dass** ein Parametersatz in allen intelligenten Geräten (4 bis 9) die Auswahl der Geräte mit System-Master- oder Teil-System-Master-Funktion definiert.

19. Dezentrales Sitzsteuerungssystem (1) nach zumindest einem der vorangehenden Ansprüche, **dadurch gekennzeichnet, dass** der Ausfall eines intelligenten Geräts (4 bis 9) dazu führt, dass ein anderes intelligentes Gerät (4 bis 9) dessen Funktion oder Teilfunktion übernimmt.

20. Dezentrales Sitzsteuerungssystem (1) nach zumindest einem der vorangehenden Ansprüche, **dadurch gekennzeichnet, dass** die einzelnen intelligenten Geräte (4 bis 9) nach dem Daisy-Chain-Prinzip oder sternförmig miteinander verschaltet ist.

21. Dezentrales Sitzsteuerungssystem (1) nach Anspruch 11, **dadurch gekennzeichnet, dass** die Steuerung in jedem intelligenten Gerät (4 bis 9) das Gerät auf Basis von Status-Informationen aus dem Kommunikationsbus (17) steuert.

22. Dezentrales Sitzsteuerungssystem (1) nach zumindest einem der vorangehenden Ansprüche, **dadurch gekennzeichnet, dass** Systemaufgaben auf Basis des Kommandos des aktiven System-Masters bzw. der aktiven System-Master ausgeführt werden.

23. Dezentrales Sitzsteuerungssystem (1) nach zumindest einem der vorangehenden Ansprüche, **dadurch gekennzeichnet, dass** der oder die aktive(n) System-Master den Status der übrigen intelligenten Geräte (4 bis 9) des Systems empfängt/empfangen und Kommandos an die Geräte zurücksendet.

24. Dezentrales Sitzsteuerungssystem (1) nach zumindest einem der vorangehenden Ansprüche, **dadurch gekennzeichnet, dass** bei Ausfall eines System-Masters ein anderes intelligentes Gerät (4 bis 9) dessen Rolle übernimmt.

25. Dezentrales Sitzsteuerungssystem (1) nach Anspruch 24, **dadurch gekennzeichnet, dass** bei Ausfall des oder der aktiven System-Master(s) nach einer vorinstallierten Prioritätenliste das intelligente Gerät (4 bis 9) ausgewählt wird, welches die Funktion des aktiven System-Masters übernimmt.

26. Dezentrales Sitzsteuerungssystem (1) nach zumindest einem der vorangehenden Ansprüche, **dadurch gekennzeichnet, dass** das intelligente Schnittstellengerät (6) einen ausreichenden, elektronisch unverlierbaren Speicher von z. B. mehr als 1GB aufweist, in welchem statistisch relevante Datenmengen während der Laufzeit oder des Betriebs gespeichert werden.

27. Dezentrales Sitzsteuerungssystem (1) nach Anspruch 26, **dadurch gekennzeichnet, dass** die gespeicherten Daten während der Laufzeit oder des Betriebs automatisch ausgewertet werden und Ausfälle frühzeitig erkannt und gemeldet werden.

28. Dezentrales Sitzsteuerungssystem (1) nach zumindest einem der vorangehenden Ansprüche, **dadurch gekennzeichnet, dass** eine Echtzeituhr vorgesehen ist, welche den exakten Zeitpunkt eines Ereignisses zur Verfügung stellt.

29. Dezentrales Sitzsteuerungssystem (1) nach Anspruch 28, **dadurch gekennzeichnet, dass** die Spannungsversorgung der Echtzeituhr über einen Langzeit-Energiespeicher, z. B. einen Superkondensator, erfolgt.

30. Dezentrales Sitzsteuerungssystem (1) nach zumindest einem der vorangehenden Ansprüche, **dadurch gekennzeichnet, dass** eine Einklemmschutzfunktion über ein di/dt-Monitoring vorgesehen ist.

31. Dezentrales Sitzsteuerungssystem (1) nach zumindest einem der vorangehenden Ansprüche, **dadurch gekennzeichnet, dass** eine Einklemmschutzfunktion kinematik- und positionsabhängig vorhanden ist.

32. Dezentrales Sitzsteuerungssystem (1) nach zumindest einem der vorangehenden Ansprüche, **dadurch gekennzeichnet, dass** eine lastunabhängige Drehzahlregelung in der Bewegungssteuerung integriert ist.

33. Dezentrales Sitzsteuerungssystem (1) nach zumindest einem der vorangehenden Ansprüche, **dadurch gekennzeichnet, dass** die Antriebe (4, 5, 7) leistungsoptimiert kommutierte BLDC-Motoren umfassen.

34. Dezentrales Sitzsteuerungssystem (1) nach Anspruch 33, **dadurch gekennzeichnet, dass** ein Bewegungsstart mit einem zeitlich steigenden Verlauf der Frequenz der leistungsoptimierten Kommutierung und ein Bewegungsstopp mit einem zeitlich fallenden Verlauf der Frequenz der leistungsoptimierten Kommutierung erfolgt.

35. Dezentrales Sitzsteuerungssystem (1) nach zumindest einem der vorangehenden Ansprüche, **dadurch gekennzeichnet, dass** die Motordrehzahl bis zu einer Drehzahl 0 regelbar ist.

36. Dezentrales Sitzsteuerungssystem (1) nach zumindest einem der vorangehenden Ansprüche, **dadurch gekennzeichnet, dass** der System-Master alle ihm untergeordneten Antriebe (4, 5, 7) so steuert, dass bei gleichzeitiger Ansteuerung mehrerer Antriebe (4, 5, 7) als Gruppe über den Kommunikationsbus (17) das Aktivieren und Deaktivieren der Bremsen (91) synchron oder bei Bedarf asynchron erfolgt.

37. Dezentrales Sitzsteuerungssystem (1) nach Anspruch 36, **dadurch gekennzeichnet, dass**, wenn bei deaktivierten Bremsen (91) einzelne Antriebe (4, 5, 7) vor den anderen, dem System-Master untergeordneten Antrieben (4, 5, 7), ihren Endpunkt der Bewegung erreichen, die Antriebssteuerung im Falle einer Kraftbeaufschlagung dieser Antriebe (4, 5, 7) mittels einer Positionsregelung solange für eine Gegensteuerung sorgt, bis mit dem Erreichen des Endpunkts der Bewegung durch den letzten Antrieb die Bremsen (91) für alle betroffenen Antriebe (4, 5, 7) wieder aktiviert werden.

38. Dezentrales Sitzsteuerungssystem (1) nach zumindest einem der vorangehenden Ansprüche, **dadurch gekennzeichnet, dass** das intelligente Steuergerät (9) und das intelligente Schnittstellengerät (6) in einem gemeinsamen Gehäuse integriert sind.

## Claims

1. A decentralised seat control system (1) for a seat (2) or seats (2), with a plurality of seat elements which are linearly or angularly movable relative to each other, with smart devices such as electric-motor, pneumatic or hydraulic drives (4, 5) and lumbar drive (7), by which the seat elements are adjustable, if necessary with a smart control unit (9) for non-smart devices or devices without a control function such as reading light (10) etc. and also if necessary with a smart interface device (6), and also with smart control panels (8) and a smart or passive power supply unit (3), the smart devices (4 to 9) are connected to a serial data bus and to the power supply unit (3) and each smart device (4 to 9) has a basic function and one freely selectable smart device additionally has the function of an active system master from which other smart devices (4 to 9) receive control commands, wherein log data are associated with the interior cabin pressure and the drives (4, 5, 7) have an integrated motion control means which have [sic] interfaces with the engine, a position feedback, a temperature sensor (93), a brake (91) and a communication bus (17).

2. A decentralised seat control system (1) according to claim 1, **characterised in that** the tasks of a system master are distributed among a plurality of smart devices (4 to 9), with each smart device (4 to 9) having a partial task or partial tasks of a partial system master in addition to its basic function.

3. A decentralised seat control system (1) according to claim 2, **characterised in that** the partial system masters form subgroups in relation to the overall functionality.

4. A decentralised seat control system (1) according to claim 1, 2 or 3, **characterised in that** a smart device (4 to 9) with a system-master or partial system-master function receives status information from other smart devices (4 to 9).

5. A decentralised seat control system (1) according to at least one of the preceding claims, **characterised in that** one of the devices (4 to 9) controls the drives (4, 5, 7) of a seat (2) or of a plurality of seats (2) and has the task of coordinating the movement of the seat elements of the seat or seats (2).

6. A decentralised seat control system (1) according to at least one of the preceding claims, **characterised in that** one of the devices (4 to 9) controls a partial region of the drives (4, 5, 7) of a seat (2) or of a plurality seats (2), another device controls another partial region of a seat (2) or of a plurality of seats (2), and the respective device has the task of coordinating the movement of the partial seat elements of the seat or seats (2).

7. A decentralised seat control system (1) according to at least one of the preceding claims, **characterised in that** the non-smart devices (4 to 9) or devices without a control function include by way of example a reading light (10), a mood light, customised illumination, a monitor, locking mechanisms (80), external sensors for detecting surroundings and/or an external operating unit.

8. A decentralised seat control system (1) according to at least one of the preceding claims, **characterised in that** the power supply unit (3) forms an interface with a vehicle electrical system and converts the vehicle electrical system voltage to e.g. 28 V.

9. A decentralised seat control system (1) according to claim 8, **characterised in that** the power supply unit (3) has one or more ports (21 to 24) to which a plurality of seats (2) can be connected or e.g. two seats (2) and other devices such as partitions or monitor drives.

10. A decentralised seat control system (1) according to claim 9, **characterised in that** the different ports (21 to 24) are equipped with a port identifier which represents a recognition feature for the devices which are to be controlled in each case.

11. A decentralised seat control system (1) according to claim 10, **characterised in that** a plurality of seats (2) with identical devices are connected to the communication bus (17) and distinguishing can be performed by way of the port identifier.

12. A decentralised seat control system (1) according to claim 11, **characterised in that** a plurality of groups are present which consist of seats (2), partitions or other means such as monitor adjustment devices, for which a minimum number of different drives (4, 5, 7) which is less than the absolute number of drives (4, 5, 7) is provided.

13. A decentralised seat control system (1) according to at least one of claims 1 to 10, **characterised in that** each seat (2) or functional group possesses an identifier and the power supply unit (3) has a splitter function by which a plurality of seats (2) or devices can be controlled.

14. A decentralised seat control system (1) according to at least one of claims 1 to 10, **characterised in that** each seat (2) or functional group possesses an identifier and a splitter function is integrated in a separate or different device of the seat control system (1), by which function a plurality of seats (2) or devices can be controlled.

15. A decentralised seat control system (1) according to at least one of the preceding claims, **characterised in that** the smart interface device (6) serves as a service interface, by means of which software and/or sets of parameters can be uploaded to all the smart devices (4 to 9) of the decentralized seat control system (1).

16. A decentralised seat control system (1) according to claim 15, **characterised in that** the smart interface device (6) serves for collecting and storing system data.

17. A decentralised seat control system (1) according to claim 15 or 16, **characterised in that** the smart interface device (6) has the function of configuration management with regard to other onboard systems in the vehicle/aeroplane.

18. A decentralised seat control system (1) according to at least one of the preceding claims, **characterised in that** one set of parameters in all the smart devices (4 to 9) defines the selection of the devices with a system-master or partial system-master function.

19. A decentralised seat control system (1) according to at least one of the preceding claims, **characterised in that** the failure of one smart device (4 to 9) leads to another smart device (4 to 9) taking over its function or sub-function.

20. A decentralised seat control system (1) according to at least one of the preceding claims, **characterised in that** the individual smart devices (4 to 9) is [sic] interconnected together by the daisy-chain principle or radially.

21. A decentralised seat control system (1) according to claim 11, **characterised in that** the controller in each smart device (4 to 9) controls the device based on status information from the communication bus (17).

22. A decentralised seat control system (1) according to at least one of the preceding claims, **characterised in that** system tasks are carried out on the basis of the command of the active system master or of the active system masters.

23. A decentralised seat control system (1) according to at least one of the preceding claims, **characterised in that** the active system master or masters receive(s) the status of the other smart devices (4 to 9) of the system and send(s) back commands to the devices.

24. A decentralised seat control system (1) according to at least one of the preceding claims, **characterised in that** if one system master fails another smart device (4 to 9) takes over its role.

25. A decentralised seat control system (1) according to claim 24, **characterised in that** if the active system master(s) fail(s) the smart device (4 to 9) which takes over the function of the active system master is selected according to a pre-installed list of priorities.

26. A decentralised seat control system (1) according to at least one of the preceding claims, **characterised in that** the smart interface device (6) has a sufficient, electronically non-erasable memory of e.g. more than 1 GB, in which statistically relevant amounts of data are stored during the running time or during operation.

27. A decentralised seat control system (1) according to claim 26, **characterised in that** the stored data are automatically evaluated during the running time or during operation and failures are recognised and reported early.

28. A decentralised seat control system (1) according to at least one of the preceding claims, **characterised in that** a real-time clock is provided which makes the exact time of an event available.

29. A decentralised seat control system (1) according to claim 28, **characterised in that** the voltage supply to the real-time clock takes place by way of a long-term energy accumulator, e.g. a supercapacitor.

30. A decentralised seat control system (1) according to at least one of the preceding claims, **characterised in that** an anti-trap function is provided by way of di/dt monitoring.

31. A decentralised seat control system (1) according to at least one of the preceding claims, **characterised in that** an anti-trap function is present in a kinematics-dependent and position-dependent manner.

32. A decentralised seat control system (1) according to at least one of the preceding claims, **characterised in that** a load-independent speed control is integrated in the motion control means.

33. A decentralised seat control system (1) according to at least one of the preceding claims, **characterised in that** the drives (4, 5, 7) comprise power-optimised commutated BLDC motors.

34. A decentralised seat control system (1) according to claim 33, **characterised in that** a movement start takes place with a path of the frequency of the power-optimised commutation which ascends over time, and a movement stop takes place with a path of the frequency of the power-optimised commutation which descends over time.

35. A decentralised seat control system (1) according to at least one of the preceding claims, **characterised in that** the motor speed can be regulated up to a rotational speed of 0.

36. A decentralised seat control system (1) according to at least one of the preceding claims, **characterised in that** the system master controls all its subordinate drives (4, 5, 7) such that in the case of simultaneous controlling of a plurality of drives (4, 5, 7) as a group by way of the communication bus (17) the activation and deactivation of the brakes (91) takes place synchronously or if necessary asynchronously.

37. A decentralised seat control system (1) according to claim 36, **characterised in that** if, when the brakes (91) are deactivated, individual drives (4, 5, 7) reach their movement end point prior to the other drives (4, 5, 7) which are subordinate to the system master, the drive control means in the case of an application of force of these drives (4, 5, 7) ensures counter-control by means of a position control until, with the movement end point being reached by the last drive, the brakes (91) for all the drives (4, 5, 7) in question are activated again.

38. A decentralised seat control system (1) according to at least one of the preceding claims, **characterised in that** the smart control unit (9) and the smart interface device (6) are integrated in a common housing.

## Revendications

1. Système de commande de siège (1) décentralisé pour un siège (2) ou des sièges (2), avec plusieurs éléments de siège mobiles linéairement ou angulairement les uns par rapport aux autres, avec des appareils intelligents tels que des entraînements (4, 5) électromoteurs, pneumatiques ou hydrauliques et un entraînement d'appui lombaire (7) par lesquels les éléments de siège peuvent être déplacés, si besoin est avec un appareil (9) de commande intelligent pour des appareils non intelligents ou des appareils sans fonction de commande tels qu'une lumière de lecture (10) etc. et également si besoin est avec un appareil d'interface intelligent (6), ainsi qu'avec des appareils de commande utilisateur intelligents (8) et un bloc d'alimentation (3) intelligent ou passif, les appareils (4 à 9) intelligents sont raccordés à un bus de données série et au bloc d'alimentation (3) et chaque appareil (4 à 9) intelligent a une fonction de base et un appareil intelligent pouvant être sélectionné librement a en plus la fonction d'un système-maître actif, duquel d'autres appareils (4 à 9) intelligents reçoivent des instructions de commande, dans lequel des données de journal sont associées à la pression interne de cabine et les entraînements (4, 5, 7) disposent d'une commande de mouvement intégrée, lesquelles présentent des interfaces avec le moteur, avec un retour d'informations sur la position, avec un capteur de température (93), avec un frein (91) et avec un bus de communication (17).

2. Système de commande de siège (1) décentralisé selon la revendication 1, **caractérisé en ce que** les tâches d'un maître-système sont réparties sur plusieurs appareils (4 à 9) intelligents, dans lequel chaque appareil (4 à 9) intelligent a outre sa fonction de base une tâche partielle ou des tâches partielles d'un maître-système partiel.

3. Système de commande de siège (1) décentralisé selon la revendication 2, **caractérisé en ce que** les maîtres-système partiels forment des sous-groupes en ce qui concerne la fonctionnalité d'ensemble.

4. Système de commande de siège (1) décentralisé selon la revendication 1, 2 ou 3, **caractérisé en ce qu'**un appareil (4 à 9) intelligent avec une fonction maître-système ou maître-système-partiel obtient des informations de statut d'autres appareils (4 à 9) intelligents.

5. Système de commande de siège (1) décentralisé selon au moins l'une des revendications précédentes, **caractérisé en ce qu'**un des appareils (4 à 9) commande les entraînements (4, 5, 7) d'un siège (2) ou de plusieurs sièges (2) et présente la tâche de coordination de mouvement des éléments de siège du ou des sièges (2).

6. Système de commande de siège (1) décentralisé selon au moins l'une des revendications précédentes, **caractérisé en ce qu'**un des appareils (4 à 9) commande une zone partielle des entraînements (4, 5, 7) d'un siège (2) ou de plusieurs sièges (2), un autre appareil commande une autre zone partielle d'un siège (2) ou de plusieurs sièges (2) et l'appareil respectif a la tâche de coordination de mouvement des éléments de siège partiels du ou des sièges (2).

7. Système de commande de siège (1) décentralisé selon au moins l'une des revendications précédentes, **caractérisé en ce qu'**à titre d'exemple une lumière de lecture (10), une lumière d'ambiance, un éclairage spécifique à un client, un moniteur, des verrouillages (80), des capteurs externes pour la détection de l'environnement et/ou une unité de commande utilisateur externe comptent parmi les appareils (4 à 9) intelligents ou appareils sans fonction de commande.

8. Système de commande de siège (1) décentralisé selon au moins l'une des revendications précédentes, **caractérisé en ce que** le bloc d'alimentation (3) forme une interface avec un réseau de bord et convertit la tension de réseau de bord sur par exemple 28 V.

9. Système de commande de siège (1) décentralisé selon la revendication 8, **caractérisé en ce que** le bloc d'alimentation (3) présente un ou plusieurs ports (21 à 24), auxquels plusieurs sièges (2) peuvent être raccordés ou par exemple deux sièges (2) et d'autres appareils tels que des cloisons ou entraînements de moniteur.

10. Système de commande de siège (1) décentralisé selon la revendication 9, **caractérisé en ce que** les différents ports (21 à 24) sont équipés d'un code de port, lequel représente une caractéristique de reconnaissance pour les appareils respectivement à commander.

11. Système de commande de siège (1) décentralisé selon la revendication 10, **caractérisé en ce que** plusieurs sièges (2) avec des appareils identiques sont raccordés au bus de communication (17) et une différenciation peut être effectuée par l'intermédiaire du code de port.

12. Système de commande de siège (1) décentralisé selon la revendication 11, **caractérisé en ce que** plusieurs groupes sont présents, lesquels sont constitués de sièges (2), cloisons ou d'autres équipements tels que des dispositifs de réglage de moniteur, pour lesquels un nombre minimal de différents entraînements (4, 5, 7) est prévu, lequel est inférieur au nombre absolu d'entraînements (4, 5, 7).

13. Système de commande de siège (1) décentralisé selon au moins l'une des revendications 1 à 10, **caractérisé en ce que** chaque siège (2) ou groupe fonctionnel possède un code et le bloc d'alimentation (3) présente une fonction de séparation, par laquelle plusieurs sièges (2) ou appareils peuvent être commandés.

14. Système de commande de siège (1) décentralisé selon au moins l'une des revendications 1 à 10, **caractérisé en ce que** chaque siège (2) ou groupe fonctionnel possède un code et une fonction de séparation est intégrée dans un appareil séparé ou autre appareil du système de commande de siège (1), par laquelle plusieurs sièges (2) ou appareils peuvent être commandés.

15. Système de commande de siège (1) décentralisé selon au moins l'une des revendications précédentes, **caractérisé en ce que** l'appareil d'interface intelligent (6) sert d'interface de service, par l'intermédiaire de laquelle des logiciels et/ou ensembles de paramètres peuvent être téléchargés sur tous les appareils (4 à 9) intelligents du système de commande de siège (1) décentralisé.

16. Système de commande de siège (1) décentralisé selon la revendication 15, **caractérisé en ce que** l'appareil d'interface intelligent (6) sert à collecter et à mettre en mémoire des données de système.

17. Système de commande de siège (1) décentralisé selon la revendication 15 ou 16, **caractérisé en ce que** l'appareil d'interface intelligent (6) a la fonction d'une gestion de configuration en ce qui concerne d'autres systèmes de bord dans le véhicule/l'avion.

18. Système de commande de siège (1) décentralisé selon au moins l'une des revendications précédentes, **caractérisé en ce qu'**un ensemble de paramètres dans tous les appareils (4 à 9) intelligents définit la sélection des appareils avec la fonction maître-système ou maître-système-partiel.

19. Système de commande de siège (1) décentralisé selon au moins l'une des revendications précédentes, **caractérisé en ce que** la défaillance d'un appareil (4 à 9) intelligent a pour effet qu'un autre appareil (4 à 9) intelligent assume la fonction ou fonction partielle de celui-ci.

20. Système de commande de siège (1) décentralisé selon au moins l'une des revendications précédentes, **caractérisé en ce que** les appareils (4 à 9) intelligents individuels sont connectés les uns aux autres selon le principe de la guirlande ou en étoile.

21. Système de commande de siège (1) décentralisé selon la revendication 11, **caractérisé en ce que** la commande dans chaque appareil (4 à 9) intelligent commande l'appareil sur la base d'informations de statut provenant du bus de communication (17).

22. Système de commande de siège (1) décentralisé selon au moins l'une des revendications précédentes, **caractérisé en ce que** des tâches de système sont exécutées sur la base de la commande du maître-système actif ou des maîtres-système actifs.

23. Système de commande de siège (1) décentralisé selon au moins l'une des revendications précédentes, **caractérisé en ce que** le ou les maîtres-système actifs reçoit/reçoivent le statut des autres appareils (4 à 9) intelligents du système et renvoie les commandes aux appareils.

24. Système de commande de siège (1) décentralisé selon au moins l'une des revendications précédentes, **caractérisé en ce que** lors d'une défaillance d'un maître-système, un autre appareil (4 à 9) intelligent assume le rôle de celui-ci.

25. Système de commande de siège (1) décentralisé selon la revendication 24, **caractérisé en ce que** lors d'une défaillance du ou des maître(s)-système actif(s), l'appareil (4 à 9) intelligent, lequel assume la fonction du maître-système actif, est sélectionné selon une liste de priorité préinstallée.

26. Système de commande de siège (1) décentralisé selon au moins l'une des revendications précédentes, **caractérisé en ce que** l'appareil d'interface intelligent (6) présente une mémoire suffisante, électroniquement imperdable de par exemple plus de 1 GO, dans laquelle des quantités de données statistiquement pertinentes sont mises en mémoire pendant le temps de marche ou le fonctionnement.

27. Système de commande de siège (1) décentralisé selon la revendication 26, **caractérisé en ce que** les données mises en mémoire sont évaluées automatiquement pendant le temps de marche ou le fonctionnement et des défaillances sont reconnues à temps et notifiées.

28. Système de commande de siège (1) décentralisé selon au moins l'une des revendications précédentes, **caractérisé en ce qu'**une horloge temps réel est prévue, laquelle met à disposition le moment exact d'un événement.

29. Système de commande de siège (1) décentralisé selon la revendication 28, **caractérisé en ce que** l'alimentation en tension de l'horloge temps réel s'effectue par l'intermédiaire d'un accumulateur d'énergie de longue durée, par exemple d'un supercondensateur.

30. Système de commande de siège (1) décentralisé selon au moins l'une des revendications précédentes, **caractérisé en ce qu'**une fonction de sécurité anti-pincement est prévue par l'intermédiaire d'une surveillance di/dt.

31. Système de commande de siège (1) décentralisé selon au moins l'une des revendications précédentes, **caractérisé en ce qu'**une fonction de sécurité anti-pincement est présente de manière dépendante de la cinématique et de la position.

32. Système de commande de siège (1) décentralisé selon au moins l'une des revendications précédentes, **caractérisé en ce qu'**une régulation de vitesse de rotation indépendante de la charge est intégrée dans la commande de mouvement.

33. Système de commande de siège (1) décentralisé selon au moins l'une des revendications précédentes, **caractérisé en ce que** les entraînements (4, 5, 7) comprennent des moteurs BLDC commutés de manière optimisée en performance.

34. Système de commande de siège (1) décentralisé selon la revendication 33, **caractérisé en ce qu'**un démarrage de mouvement s'effectue avec une variation s'élevant dans le temps de la fréquence de la commutation optimisée en performance et un arrêt de mouvement s'effectue avec une variation diminuant dans le temps de la fréquence de la commutation optimisée en performance.

35. Système de commande de siège (1) décentralisé selon au moins l'une des revendications précédentes, **caractérisé en ce que** la vitesse de rotation de moteur peut être régulée jusqu'à une vitesse de rotation 0.

36. Système de commande de siège (1) décentralisé selon au moins l'une des revendications précédentes, **caractérisé en ce que** le maître-système commande tous les entraînements (4, 5, 7) subordonnés à celui-ci, de sorte que lors d'une commande simultanée de plusieurs entraînements (4, 5, 7) en tant que groupe, l'activation et la désactivation des freins (91) s'effectue de manière synchrone ou en cas de besoin de manière asynchrone par l'intermédiaire du bus de communication (17).

37. Système de commande de siège (1) décentralisé selon la revendication 36, **caractérisé en ce que**, si, lorsque les freins (91) sont désactivés, certains entraînements (4, 5, 7) atteignent leur point d'extrémité du mouvement avant les autres entraînements (4, 5, 7) subordonnés au maître-système, la commande d'entraînement, dans le cas d'une soumission à une force de ces entraînements (4, 5, 7) au moyen d'une régulation de position, assure une commande complémentaire jusqu'à ce que, avec l'atteinte du point d'extrémité du mouvement par le dernier entraînement, les freins (91) pour tous les entraînements (4, 5, 7) concernés soient à nouveau activés.

38. Système de commande de siège (1) décentralisé selon au moins l'une des revendications précédentes, **caractérisé en ce que** l'appareil (9) de commande intelligent et l'appareil d'interface intelligent (6) sont intégrés dans un boîtier commun.
